# EUROPÄISCHE PATENTSCHRIFT

(11) **EP 0 762 964 B1**
(45) Veröffentlichungstag und Bekanntmachung des Hinweises auf die Patenterteilung: **03.05.2000**
(21) Anmeldenummer: 96903906.4
(22) Anmeldetag: 28.02.1996
(51) Int. Cl.: B60T 8/00

(54) **VERFAHREN UND VORRICHTUNG ZUR STEUERUNG DER BREMSKRAFTVERTEILUNG EINES FAHRZEUGS**
PROCESS AND DEVICE FOR CONTROLLING THE BRAKING FORCE DISTRIBUTION OF A VEHICLE
PROCEDE ET DISPOSITIF DE COMMANDE DE LA REPARTITION DE LA FORCE DE FREINAGE D'UN VEHICULE

(30) Priorität: 27.03.1995 DE 19511152
(43) Veröffentlichungstag der Anmeldung: 19.03.1997
(73) Patentinhaber: ROBERT BOSCH GMBH, 70442 Stuttgart (DE)
(72) Erfinder: DOMINKE, Peter, D-74321 Bietigheim-Bissingen (DE); GOTTWICK, Ulrich, D-70192 Stuttgart (DE)
(86) Internationale Anmeldenummer: DE9600327
(87) Internationale Veröffentlichungsnummer: WO9630240

(56) Entgegenhaltungen:
- WO-A-90/11916
- DE-A- 4 208 581
- DE-A- 4 226 646
- FR-A- 2 539 687

## Beschreibung

### Stand der Technik

Die Erfindung betrifft ein Verfahren und eine Vorrichtung zur Steuerung der Bremskraftverteilung zwischen Vorderachse und Hinterachse eines Fahrzeugs gemäß den Oberbegriffen der unabhängigen Patentansprüche.

Aus der DE 41 12 388 A1 (US-Patent 5,281,012) ist eine Bremsdruckregelanlage für ein Fahrzeug bekannt, bei welchem neben einer Antiblockier-Schutzregelung die Bremskraftverteilung zwischen Vorder- und Hinterachsbremsen elektronisch eingestellt wird. Durch die bekannte elektronische Regelung der Bremskraftverteilung wird der üblicherweise eingesetzte Druckminderer ersetzt. Fällt dieser Regler aus irgendeinem Grund aus, kann es infolge der überbremsten Hinterachse in einigen Bremssituationen zu einem Blockieren der Hinterräder vor den Vorderrädern kommen. Dies kann zu ungewollten Fahrsituationen führen.

Es ist daher Aufgabe der Erfindung, eine ausfallsichere Bremskraftverteilung zwischen Vorder- und Hinterachse ohne hydraulischen oder pneumatischen Druckminderer zu schaffen. Vorzugsweise soll diese ausfallsichere Bremskraftverteilung als Notbetrieb bei Ausfall eines elektronischen Reglers zur Bremskraftverteilung dienen.

Dies wird durch die kennzeichnenden Merkmale der unabhängigen Patentansprüche erreicht.

Aus der Veröffentlichung SAE 89078 "Electronic Control Unit of the Sumitomo Electronic Anti-Lock-System" ist bekannt, die Funktionsfähigkeit der elektronischen Steuereinheit und der Komponenten einer Bremsanlage eines Kraftfahrzeugs zu überprüfen.

### Vorteile der Erfindung

Die erfindungsgemäße Vorgehensweise gewährleistet, daß die Hinterräder nicht vor den Vorderrädern blockieren, ohne daß ein elektronischer Regler zur Bremskraftverteilung vorhanden ist. Besondere Vorteile ergeben sich daher aus der erfindungsgemäßen Vorgehensweise bei Ausfall des elektronischen Reglers zur Bremskraftverteilung.

Dies hat den Vorteil, daß auch im Fehlerfall die Stabilität des Fahrzeugs beim Bremsvorgang erhalten bleibt. Auf zusätzliche Druckminderer für den Notfall kann verzichtet werden.

Besonders vorteilhaft ist, daß die erfindungsgemäße Vorgehensweise zur Bremskraftverteilung ohne zusätzliche Informationen eine Steuerung der Bremskraftverteilung zwischen Vorder- und Hinterachse ermöglicht.

Besondere Vorteile zeigt die erfindungsgemäße Vorgehensweise beim Einsatz im sogenannten Doppelfehlerfall, wenn beispielsweise alle Drehzahlsensoren einer Achse ausfallen.

Daneben kann in vorteilhafter Weise die erfindungsgemäße Vorgehensweise auch außerhalb des Fehlerfalls eingesetzt werden.

Besonders vorteilhaft ist, daß der sich an der Hinterachse einstellende Druck abhängig von dem vom Fahrer über die Bremspedalbetätigung vorgegebenen Vordruck einstellt.

Besonders vorteilhaft ist dabei in einem Ausführungsbeispiel die Abhängigkeit der Einstellung des Hinterachsbremsdrucks abhängig von Bordspannung, Vordruck oder von dem bereits an den Hinterradbremsen vorhandenen Bremsdruckniveau.

Eine weitere vorteilhafte Erhöhung der Verfügbarkeit der Bremsanlage wird dadurch erreicht, daß die erfindungsgemäße Strategie zur Bremskraftverteilung nicht im Hauptrechner, der die elektronische Regelung durchführt, berechnet wird, sondern in einem separaten Baustein, der unabhängig vom Hauptrechenelement arbeitet.

Ein weiterer Vorteil wird durch die zeitliche Begrenzung der erfindungsgemäßen Vorgehensweise erreicht. Dadurch werden die Komponenten vor thermischer Überlastung bei lang anstehendem Bremswunsch geschützt. Dabei wird in vorteilhafter Weise nach Ablauf der vorgegebenen Zeit das Druckniveau in den Hinterradbremsen nach einer vorgegebenen Rampe auf das Vordruckniveau angehoben.

Weitere Vorteile ergeben sich aus der nachfolgenden Beschreibung von Ausführungsbeispielen bzw. aus den abhängigen Patentansprüchen.

### Zeichnung

Die Erfindung wird nachstehend anhand der in der Zeichnung dargestellten Ausführungsformen näher erläutert. Dabei zeigt Figur 1 ein Übersichtsblockschaltbild, bei welchem die erfindungsgemäße Vorgehensweise eingesetzt ist. Figur 2 und 3 zeigen Zeitdiagramme bezüglich der Ansteuerung der Ventile und der Pumpe sowie Druckverläufe. Figur 4 schließlich gibt mittels eines Flußdiagramms Hinweise auf eine Realisierung der erfindungsgemäßen Vorgehensweise als Rechnerprogramm.

### Beschreibung von Ausführungsbeispielen

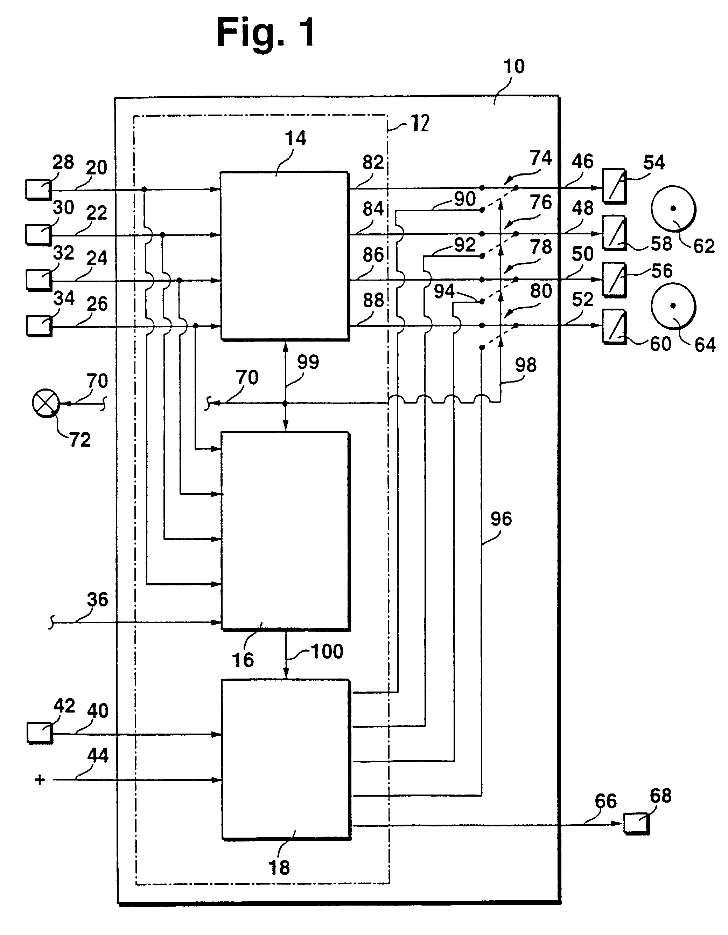

In Figur 1 ist eine Steuereinheit 10 dargestellt, welche wenigstens einen Mikrocomputer 12 umfaßt. Der Mikrocomputer 12 enthält im bevorzugten Ausführungsbeispiel eine Reglereinheit 14, eine Fehlerermittlungseinheit 16 und eine Notlaufeinheit 18. Über die Leitungen 20, 22, 24 und 26 ist die Steuereinheit 10 bzw. der Mikrocomputer 12 mit Drehzahlfühlern 28, 30, 32 und 34 für die Räder eines zweiachsigen Fahrzeugs verbunden. Die Leitungen 20, 22, 24 und 26 werden dabei im bevorzugten Ausführungsbeispiel der Reglereinheit 14 und der Fehlerermittlungseinheit 16 zugeführt. Ferner ist beispielhaft eine Eingangsleitung 36 dargestellt, welche der Steuereinheit 10 bzw. dem Mikrocomputer 12, dort der Fehlerermittlungseinheit 16, Betriebsparameter der Bremsventile, der Rückförderpumpe, etc. zuführt. Ferner ist eine Eingangsleitung 40 der Steuereinheit 10 dargestellt, welche diese mit einem Bremspedalschalter 42 verbindet. Die Leitung 40 ist dabei im bevorzugten Ausführungsbeispiel zumindest der Notlaufeinheit 18 zugeführt. Ferner ist eine Eingangsleitung 44 der Steuereinheit 10 dargestellt, welche der Notlaufeinheit 18 ein Maß für die Bordnetzspannung zuführt. Neben den dargestellten Eingangsleitungen können weitere, nicht dargestellte Eingangsleitungen vorgesehen sein, welche beispielsweise ein Maß für die Bremsdrücke, insbesondere der Hinterradbremsen, ein Maß für das abgegebene Motormoment, etc. zuführen.

Als Ausgangsleitungen werden in Figur 1 die Leitungen 46, 48, 50 und 52 dargestellt, welche zu den Einlaßventilen 54 und 56 bzw. zu den Auslaßventilen 58 und 60 der Bremsen zweier Hinterräder 62 und 64 geführt sind. Ferner ist eine Ausgangsleitung 66 zur Ansteuerung der Rückförderpumpe 68 vorgesehen. Die Ausgangsleitung 66 geht dabei zumindest von der Notlaufeinheit 18 und (in Figur 1 nicht dargestellt) von der Regeleinheit 14 aus. Eine weitere Ausgangsleitung 70 führt von der Steuereinheit 10, dort von der Fehlerermittlungseinheit 16 auf eine Warnlampe 72. Die Ausgangsleitungen 46 bis 52 gehen von Schaltelementen 74, 76, 78 und 80 aus, welche die Ausgangsleitungen mit Ausgangsleitungen 82, 84, 86 und 88 der Regeleinheit 14, im anderen Schaltzustand mit Ausgangsleitungen 90, 92, 94 und 96 der Notlaufeinheit 18 verbinden. Betätigt werden die Schaltelemente über eine Leitung 98, welche von der Fehlerermittlungseinheit 16 ausgeht. Die Fehlerermittlungseinheit 16 ist ferner über eine Leitung 99 mit der Regeleinheit 14 und über eine Leitung 100 mit der Notlaufeinheit 18 verbunden.

Der hydraulische Teil der Bremsanlage mit Ein- und Auslaßventilen, Speicherkammern und Rückförderpumpe entspricht dabei im bevorzugten Ausführungsbeispiel dem aus den eingangs genannten Stand der Technik.

Neben dem in Figur 1 dargestellten bevorzugten Ausführungsbeisepiel ist in einem anderen vorteilhaften Ausführungsbeispiel vorgesehen, daß die Notlaufeinheit 18 nicht Teil des Mikrocomputers 12 ist, sondern als separater Baustein, beispielsweise ein separater Mikrocomputer, ausgeführt ist.

Ferner wird die erfindungsgemäße Vorgehensweise nicht nur bei zweiachsigen, sondern bei mehrachsigen Fahrzeugen angewandt. Entsprechend wird die Zahl der Eingangs- und Ausgangsleitungen erhöht.

Ferner wird in einem vorteilhaften Ausführungsbeispiel die Einheit 18 zur Steuerung der Bremskraftverteilung nicht nur im Notlauf, sondern auch im Normalbetrieb zur Bremskraftverteilung herangezogen. In diesem Fall kann auf die Schaltelemente Verzichtet werden und die Ventile der Hinterachsbremsen direkt aus der Einheit 18 angesteuert werden.

Im Normalbetrieb führt im bevorzugten Ausführungsbeispiel die Regeleinheit 14 wenigstens eine Antiblockierschutzregelung und eine Bremskraftverteilungsregelung gemäß dem eingangs genannten Stand der Technik durch. Für die Bremskraftverteilungsregelung wird die Differenz zwischen dem schnellsten Vorderrad und dem langsamsten Hinterrad gebildet und mit einem vorgegebenen Schwellwert verglichen. Bei Überschreiten des Schwellwertes durch die Differenz zwischen dem schnellsten Vorderrad und dem langsamsten Hinterrad wird der Druck in den Hinterradbremsen konstant gehalten, so daß die vorgegebene Differenz nicht überschritten wird. Die Fehlerermittlungseinheit 16 ermittelt Fehlerzustände im Bereich der Steuereinheit 10, insbesondere des Mikrocompters 12, der Raddrehzahlfühler 28 bis 34, der Ventile 54 bis 60, der Rückförderpumpe 68, etc.. Bei erkanntem Fehlerzustand steuert die Fehlerermittlungseinheit 16 die Warnlampe 72 zur Fahrerinformation an. Ferner schaltet sie wenigstens bei Auftreten eines Doppelfehlers im Bereich der Raddrehzahlfühler, beispielsweise wenn beide Vorderrad- oder Hinterraddrehzahlfühler fehlerbehaftet sind, die Regeleinheit 14 ab und schaltet über die Leitung 100 die Notlaufeinheit 18 ein. Ferner schaltet die Fehlerermittlungseinheit 16 in diesem Betriebszustand über die Leitung 98 die Schaltelemente 74 bis 80 um, so daß die Regeleinheit 14 die Hinterradbremsventile 54 bis 60 nicht mehr ansteuert.

Betätigt in diesem Betriebszustand der Fahrer das Bremspedal, so aktiviert die Notlaufeinheit 18 bei Vorliegen des Bremspedalschaltersignals über die Leitung 40 die Rückförderpumpe 68 zur Entleerung des Zwischenspeichers, in den bei Druckabbau an den Bremsen das Druckmittel einströmt. Ferner wird die erfindungsgemäße Vorgehensweise zur Bremskraftverteilung zwischen Vorder- und Hinterachse aktiviert. Diese besteht darin, daß bei Bremsbetätigung die Einlaß- und Auslaßventile der Hinterradbremsen abwechslungsweise auf die Weise angesteuert werden, daß sich im Mittel eine Druckabsenkung an den Hinterrädern gegenüber dem vom Fahrer über die Bremspedalbetätigung vorgegebenen Bremsdruck ergibt. Dies führt zu einer Verminderung der Blockiergefahr an den Hinterrädern. Die Ansteuerung der Einlaß- und Auslaßventile der Hinterradbremsen erfolgt mit einer vorgegebenen Öffnungs- und Schließzeit, die im Mittel zu einer Bremsdruckeinstellung unterhalb des vom Fahrer vorgegebenen Vordrucks führt. Dabei sind auch Druckhaltephasen vorgesehen. Bei ausreichender Pumpleistung der Rückförderpumpe und ausreichendem Pulspausenverhältnis zwischen den Druckaufbau- und Druckabbaupulsen findet ein Druckabbau in die leere Speicherkammer statt. Die ständige Druckaufbau- und abbaupulsreihe gemäß der erfindungsgemäßen Vorgehensweise stellt dabei eine Nachbildung eines Druckminderers dar. In den Hinterradbremsen stellt sich infolge der raddruckabhängigen unterschiedlichen Aufbau- und Abbaudruckgradienten im Mittel ein Bremsdruck ein, der gegenüber dem vom Fahrer vorgegebenen Druck vermindert ist.

In einem bevorzugten Ausführungsbeispiel wird die abwechslungsweise Ansteuerung der Ventile bei einer Fehlererkennung durch die Fehlerermittlungseinheit 16 ausgelöst. In anderen vorteilhaften Ausführungsbeispielen erfolgt dies nur, wenn beispielsweise alle Drehzahlfühler einer Achse ausfallen und die aus dem Stand der Technik bekannte Bremsverteilungsregelung nicht mehr durchgeführt werden kann. In einem anderen vorteilhaften Ausführungsbeispiel wird durch die abwechslungsweise Ansteuerung der Ventile in allen Betriebsphasen eine Bremskraftverteilung eingestellt.

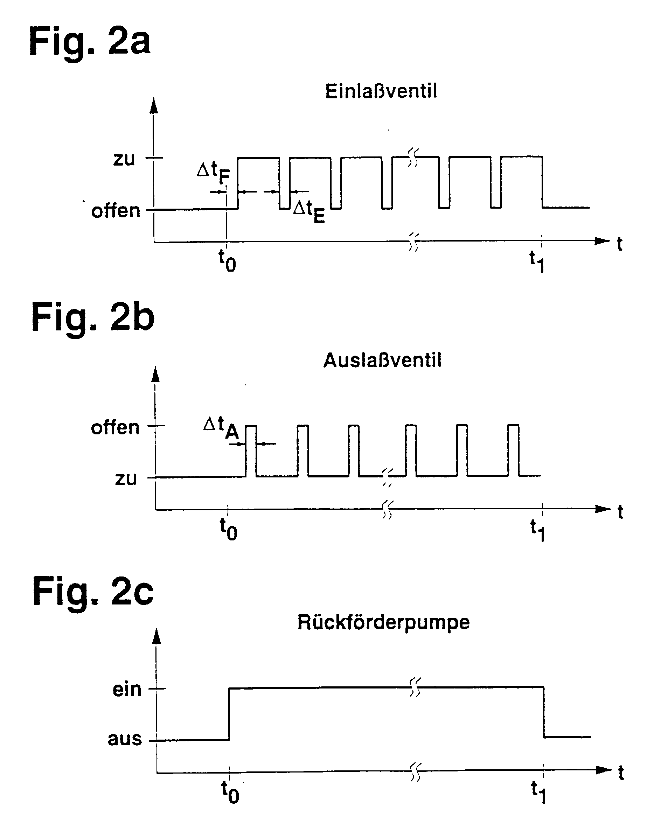

In Figur 2 ist das erfindungsgemäße abwechslungsweise Ansteuern der Einlaß- und Auslaßventile anhand von Zeitdiagrammen dargestellt. Dabei wird in Figur 2a die Ansteuerung der Einlaß-, in Figur 2b die Ansteuerung der Auslaßventile dargestellt. Figur 2c beschreibt die Ansteuerung der Rückförderpumpe. Zum Zeitpunkt T0 betätigt der Fahrer das Bremspedal und leitet einen Bremsvorgang ein. Zur Verbesserung der Dynamik des Druckaufbaus wird gemäß einer bevorzugten Ausführungsform der Erfindung zunächst ein Füllpuls ΔTF vorbestimmter Länge für die Einlaßventile ausgegeben. Diese bleiben nach Bremsbetätigung für die Zeit ΔTF offen, so daß abhängig von der Pedalbetätigung des Fahrers Druck in den Radbremsen aufgebaut wird. Auf diese Weise wird der Sättigungsdruck schneller erreicht. Danach wird das Einlaßventil geschlossen und dann wieder für eine vorbestimmte Zeit ΔTE geöffnet. Während des geschlossenen Einlaßventils wird das Auslaßventil für eine Zeit ΔTA geöffnet (vgl. Figur 2b).

Zum Zeitpunkt T1 wird der Bremsvorgang beendet. Die Ansteuerung des Einlaßventils wird beendet, das Einlaßventil somit geöffnet. Auch die Ansteuerung des Auslaßventils wird beendet und das Ventil geschlossen. Zum Zeitpunkt T1 wird ferner die Rückförderpumpe ausgeschaltet.

Die Zeitpunkte T0 und T1 werden von der Steuereinheit 10 durch das Schalten des Bremspedalschalters 42 erkannt, dessen Schaltzustand über die Eingangsleitung 40 ausgelesen wird. T1 kann zusätzlich durch ein Zeitglied aktiviert werden.

Die Zeitdauern ΔTE und ΔTA sind vorgegeben und werden experimentell für jede Bremsanlage bestimmt. Entscheidend bei der Bestimmung der Pulslängen ist dabei der erreichbare Sättigungsdruck, der unterhalb dem vom Fahrer vorgegebenen Vordruck im Sinne einer Begrenzung des Drucks an der Hinterachse liegen muß.

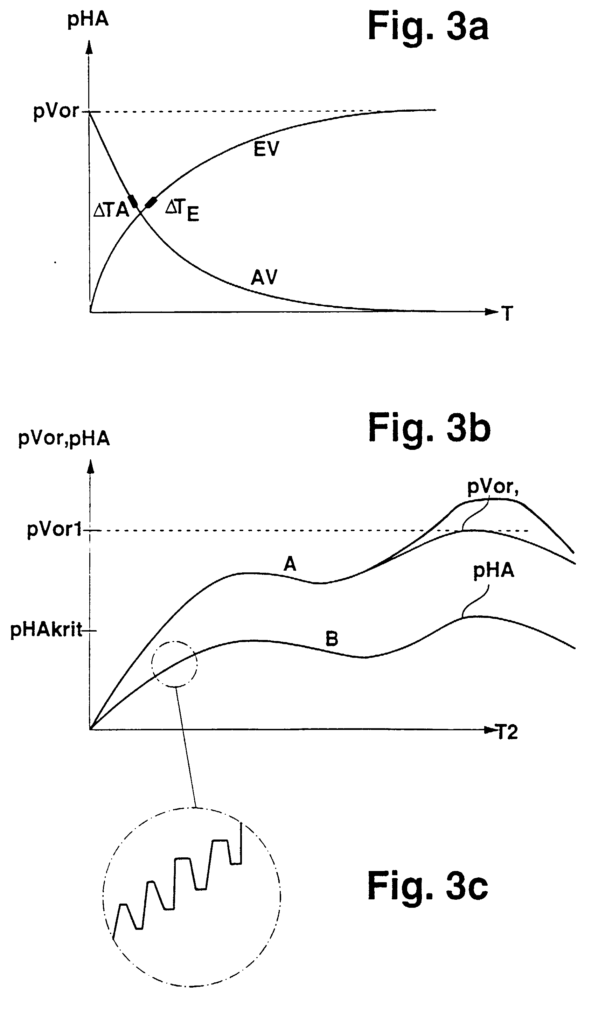

In Figur 3a ist der Druckverlauf über der Zeit an einem offenen Einlaßventil (EV) und an einem offenen Auslaßventil (AV) skizziert. Figur 3b zeigt den Druckverlauf an den Hinterachsbremsen über der Zeit bei einem Bremsvorgang unter Einsatz der erfindungsgemäßen Vorgehensweise. In Figur 3c ist der Druckauf- und -abbau infolge der abwechslungsweisen Ansteuerung der Ventile vergrößert dargestellt.

Bei einem vom Fahrer vorgegebenen Vordruck Pvor und der abwechslungsweisen Ansteuerung der Ventile erfolgt über der Zeit ein Druckaufbau bzw. Druckabbau an den Ventilen abhängig von der Zeit wie in Figur 3a dargestellt. Dabei steigt der aufgebaute Druck in den Hinterachsbremsen beim Öffnen der Einlaßventile zunächst steil an. Da zunächst in der Bremse kein Druck aufgebaut ist, nimmt der Bremsdruck durch Öffnen des Auslaßventils zunächst nur wenig ab. Mit der Zeit verringert sich der Druckaufbau und vergrößert sich der Druckabbau. Es wird ein Sättigungswert erreicht, wenn in der Zeit ΔTE soviel Druckaufbau stattfindet wie in der Zeit ΔTA Druck abgebaut wird (vgl. Figur 3a).

Der Verlauf des mittleren Drucks in den Hinterradbremsen über der Zeit bei einer Bremsbetätigung ist in Figur 3b dargestellt. Dabei wird vom Fahrer der Vordruck Pvor (vgl. Verlauf A) vorgegeben. Bei entsprechender Auslegung der Pulsdauern wird der für die Fahrstabilität kritische Hinterachsdruck PHAkrit nicht überschritten (vgl. Verlauf B). Ändert der Fahrer den Vordruck auf einen größeren Wert (vgl. Verlauf A) so stellt sich ein neuer mittlerer Sättigungswert ein.

Der eigentliche Druckverlauf durch die Aufbau- und Abbaupulse ist in Figur 3c für einen Ausschnitt des Verlaufes B in Figur 3b dargestellt.

Durch geeignete Anpassung der Pulspausenzeit bzw. der Pulslänge ΔTE und ΔTA wird der erreichbare Sättigungsdruck in den Hinterradbremsen so begrenzt, daß bis zu einem Vordruck Pvorl der Druck in den Hinterradbremsen den kritischen Wert nicht übersteigt und damit die Hinterräder nicht blockieren. Dabei ist der Vordruck Pvor1 der Druck, bei dem die Vorderräder auf Fahrbahnen mit einem Kraftschlußbeiwert von ungefähr 0,8 blockieren. Gibt der Fahrer einen höheren Vordruck vor, so blockieren auf diesen Fahrbahnen die Vorderräder, so daß mit Blick auf die Fahrzeugstabilität die Hinterräder nicht mehr am Blockieren gehindert werden müssen (vgl. Zeitpunkt T2 in Fig. 3b).

Eine weitere Verbesserung der Bremskraftverteilung wird dadurch erreicht, daß die Pulszeiten in Abhängigkeit von Bordspannung und/oder Vordruck variieren. Dazu sind die Pulszeiten in Abhängigkeit der Bordspannung und/oder des Vordrucks in einer Tabelle abgelegt und werden entsprechend bei Bremsbetätigung ausgelesen. Der Vordruck wird dabei durch einen Pedalwegsensor oder einen Drucksensor zur Bestimmung des Bremswunsches erfaßt.

Ferner ergibt sich eine Verbesserung der Bremskraftverteilung, wenn die Pulszeiten abhängig davon gewählt werden, ob der Hinterradbremsdruck schon den Sättigungswert erreicht hat oder sich noch in der Angleichphase befindet. Dies kann abgeschätzt werden aus den Druckaufbau- und Druckabbauzeiten oder durch Zählen der Pulse. Grundsätzlich wird eine längere Pulslänge zum schnelleren Erreichen des Sättigungsdrucks in der Angleichsphase gewählt, während im Bereich des Sättigungswertes kleinere Pulslängen ausreichend sind.

Die erfindungsgemäße Vorgehensweise der abwechslungsweisen Ansteuerung von Einlaß- und Auslaßventilen eignet sich besonders als Notlauf, wenn mehrere kritische Fehler erkannt werden. Dies gilt insbesondere bei Fehlern, wenn dem Regler keine zuverlässigen Daten mehr zur Verfügung stehen, aus denen die elektronische Bremskraftverteilungsfunktion aufrechterhalten werden könnte. Dies ist insbesondere bei Drehzahlfehlerfühlern der Fall, bei welchen die Drehzahlerfassungen an einer Achse komplett ausfällt.

In einem bevorzugten Ausführungsbeispiel befindet sich die beschriebene Notlauffunktion in einem vom eigentlichen Mikrocomputer getrennten Baustein. Dadurch kann die Notlauffunktion auch bei Ausfall des Mikrocomputers aktiviert werden. In einem anderen vorteilhaften Ausführungsbeispiel ist die Notlauffunktion im Mikrocomputer eingebaut. Bei Ausfall des Rechners kann dann auch die Notlauffunktion nicht mehr aktiviert werden. Dies wird in diesem vorteilhaften Ausführungsbeispiel dem Fahrer durch zusätzliche Ansteuerung einer zusätzlichen Warnlampe angezeigt.

Wenn z.B. der Fahrer überdurchschnittlich lang das Bremspedal betätigt oder der Bremswunsch irrtümlich detektiert wird, kann es zu thermischer Überlastung der Ventile und der Rückförderpumpe kommen. Daher wird bei einem bevorzugten Ausführungsbeispiel zum Schutz der Komponenten vor dieser thermischen Überlastung bei lang anstehendem Bremswunsch oder bei irrtümlicher Bremswunschdetektierung die Ansteuerzeit der Pulsreihe zeitlich begrenzt werden. Ein lang anstehender Bremswunsch kann dabei nur bei langsamer Fahrt oder bei stehendem Fahrzeug vorliegen, so daß keine Fahrzeugstabilitätsprobleme bestehen. Bei Ablauf der vorgegebenen Zeit wird der Druck auf das Druckniveau des Vordrucks bei Beendigung des abwechslungsweisen Ansteuerns von Einlaßund Auslaßventile durch eine Aufbaupulsreihe aufgebaut. Diese führt das Druckniveau an den Hinterachsbremsen langsam auf das Vordruckniveau heran. Dadurch wird ein sanfter Übergang erreicht und eine möglicherweise bei langsamer Fahrt plötzliche Änderung des Bremsverhaltens des Fahrzeugs vermieden.

Neben der eingangs geschilderten, bekannten Bremskraftverteilungsfunktion findet die erfindungsgemäße Vorgehensweise als Notlauf auch bei anderen Strategien zur Bremsdruckverteilung zwischen Vorder- und Hinterachse Anwendung.

Ferner wird die erfindungsgemäße Vorgehensweise auch in einem vorteilhaften Ausführungsbeispiel nicht nur als Notlauf, sondern generell als Bremskraftverteilungsfunktion auch im Normalbetrieb eingesetzt.

Die erfindungsgemäße Vorgehensweise ist ferner nicht auf eine hydraulische Bremsanlage mit Einlaß- und Auslaßventilen, Rückförderpumpe und Speicherkammer beschränkt. Vielmehr zeigt sich die erfindungsgemäße Vorgehensweise in einem wechselweisen Druckaufbau- und druckabbau an den Hinterachsbremsen, durch welche ein mittlerer Sättigungsdruck unterhalb des vom Fahrer vorgegebenen Vordrucks einstellt. Dies kann auch durch andere hydraulische Lösungen, beispielsweise durch die Verwendung von 3/2-Ventilen oder bei pneumatischen Bremsanlagen erfolgen.

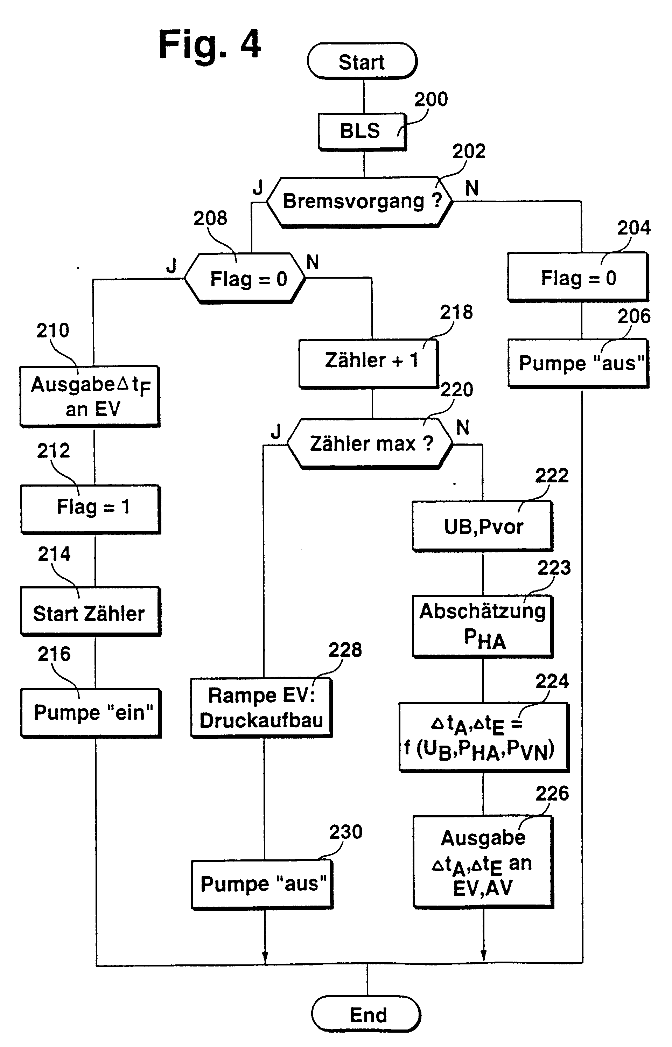

Figur 4 zeigt ein Flußdiagramm, welches Hinweise auf eine Realisierung der erfindungsgemäßen Vorgehensweise als Rechnerprogramm gibt.

Im bevorzugten Ausführungsbeispiel wird der in Figur 4 dargestellte Programmteil bei Erkennen eines kritischen Fehlers eingeleitet. In anderen Ausführungsbeispielen wird der Programmteil zu vorgegebenen Zeitpunkten während eines Bremsvorgangs gestartet.

Nach Start des Programmteils wird im ersten Schritt 200 der Signalzustand des Bremspedalschalters BLS eingelesen. Daraufhin wird im Schritt 202 überprüft, ob ein Bremsvorgang vorliegt. Ist dies nicht der Fall, wird eine Marke im Schritt 204 auf den Wert 0 gesetzt und im darauffolgenden Schritt 206 die Rückförderpumpe ausgeschaltet. Danach wird der Programmteil beendet und zu gegebener Zeit wiederholt.

Wurde im Schritt 202 erkannt, daß ein Bremsvorgang vorliegt, wird im darauffolgenden Schritt 208 die Marke dahingehend überprüft, ob sie den Wert 0 aufweist. Ist dies der Fall, so zeigt dies den Beginn eines Bremsvorgangs an. Daher wird gemäß Schritt 210 an das oder die Einlaßventile der Füllpuls ΔTF ausgegeben bzw. für die Zeit ΔTF der Druckaufbau an den Hinterradbremsen zugelassen. Danach wird im Schritt 212 die Marke auf den Wert 1 gesetzt und im darauffolgenden Schritt 214 ein Zähler gestartet. Danach wird im Schritt 216 die Pumpe eingeschaltet. Danach wird der Programmteil beendet und zu gegebener Zeit wiederholt.

Wurde im Schritt 208 erkannt, daß die Marke nicht den Wert 0 aufweist, das heißt, daß schon ein Bremsvorgang nicht erstmalig erkannt wurde, wird gemäß Schritt 218 der Zähler um den Wert 1 erhöht. Daraufhin wird im Abfrageschritt 220 überprüft, ob der Zähler seinen Maximalwert erreicht hat.

Ist dies nicht der Fall, wird im bevorzugten Ausführungsbeispiel im Schritt 222 die Bordnetzspannung UB, sowie der Vordruck Pvor eingelesen. In Schritt 223 wird aus dem Vordruck Pvor und den bereits erfolgten Druckauf- und -abbaupulsen der aktuelle Hinterradbremsdruck abgeschätzt. Daraufhin wird im Schritt 224 die Ansteuerzeiten zum Druckaufbau ΔTE sowie zum Druckabbau ΔTA nach einem vorgegebenen Kennfeld auf der Basis der erfaßten Parameter ausgelesen. Im darauffolgenden Schritt 226 werden zu vorgegebenen Zeitpunkten die Einlaßund Auslaßventile mit den ermittelten Pulsen angesteuert. Danach wird der Programmteil beendet und zu gegebener Zeit wiederholt.

Hat der Zähler im Schritt 220 seinen Maximalwert erreicht, wird gemäß Schritt 228 ein rampenförmiger Druckaufbau in den Hinterradbremsen eingeleitet und im Schritt 230 die Pumpe ausgeschaltet. Danach wird der Programmteil beendet.

Die zeitliche Steuerung des Programmteils nach Figur 4 erfolgt dabei derart, daß mit jedem Programmdurchlauf ein Druckaufbau- und ein Druckabbauimpuls ausgegeben werden kann.

## Patentansprüche

1. Verfahren zur Steuerung der Bremskraftverteilung zwischen Vorderachse und Hinterachse eines Kraftfahrzeugs, wobei durch eine Steuereinheit (10) wenigstens an den Hinterradbremsen (62, 64) Druck aufgebaut und abgebaut wird, dadurch gekennzeichnet, daß bei Bremsbetätigung durch abwechslungsweisen Druckaufbau und Druckabbau an den Hinterradbremsen (62, 64) im Mittel ein Sättigungsbremsdruck (pHA) eingestellt wird, welcher unterhalb des vom Fahrer durch die Bremspedalbetätigung vorgegebenen Vordrucks (pVor) sich befindet im Sinne einer Begrenzung des Drucks (pHA) an der Hinterachse.

2. Verfahren nach Anspruch 1, dadurch gekennzeichnet, daß der wechselweise Druckaufbau und Druckabbau an den Hinterradbremsen (62, 64) durch abwechslungsweises Ansteuern von Einlaß- und Auslaßventilen (54 - 60) erfolgt.

3. Verfahren nach einem der vorhergehenden Ansprüche, dadurch gekennzeichnet, daß der Druckaufbau und Druckabbau durch vorgegebene Druckaufbau- und Druckabbaupulse (ΔtE, ΔtA) vorgenommen wird.

4. Verfahren nach Anspruch 3, dadurch gekennzeichnet, daß die Länge der Druckaufbau- und Druckabbaupulse (ΔtE, ΔtA) abhängig ist von wenigstens einer der Größen Bordnetzspannung (UB), Vordruck (Pvor) und Hinterradbremsdruck (pHA).

5. Verfahren nach einem der vorhergehenden Ansprüche, dadurch gekennzeichnet, daß bei Beginn des Bremsvorgangs ein vorgegebener Druckaufbaupuls (ΔtF) ausgegeben wird.

6. Verfahren nach einem der vorhergehenden Ansprüche, dadurch gekennzeichnet, daß während des Bremsvorgangs eine Rückförderpumpe (68) eingeschaltet ist.

7. Verfahren nach einem der vorhergehenden Ansprüche, dadurch gekennzeichnet, daß die Pulslängen (ΔtE, ΔtA) der Druckaufbau- und Druckabbauimpulse derart bestimmt sind, daß bis zu einem vom Fahrer vorgegebenen Vordruck (Pvor1) der kritische Bremsdruck (pHAkrit) in den Hinterradbremsen (62, 64), bei dem bei einem vorgegebenen Kraftschlußbeiwert die Hinterräder zum Blockieren neigen, nicht überschritten wird.

8. Verfahren nach einem der vorhergehenden Ansprüche, dadurch gekennzeichnet, daß der abwechslungsweise Druckauf- und Druckabbau zeitlich begrenzt ist.

9. Verfahren nach einem der vorhergehenden Ansprüche, dadurch gekennzeichnet, daß nach Ablauf einer maximalen vorgegebenen Zeit eine Druckaufbaupulsreihe ausgegeben wird, welche den Hinterradbremsdruck (pHA) rampenförmig an den vom Fahrer vorgegebenen Vordruck (pVor) heranführt.

10. Verfahren nach einem der vorhergehenden Ansprüche, dadurch gekennzeichnet, daß der wechselweise Druckauf- und -abbau an den Hinterachsbremsen (62, 64) bei Ausfall eines elektronischen Bremskraftverteilungsreglers (14) durchgeführt wird, vorzugsweise in Fehlerfällen, in denen dem Regler wesentliche Informationen zur Durchführung der Bremskraftverteilungsregelung fehlen.

11. Vorrichtung zur Steuerung der Bremskraftverteilung zwischen Vorderachse und Hinterachse eines Kraftfahrzeugs mit einer elektronischen Steuereinheit (10), die wenigstens an den Hinterradbremsen (62, 64) Druck aufbaut und Druck abbaut, dadurch gekennzeichnet, daß die Steuereinheit (10) Mittel (14, 18) aufweist, die bei Bremsbetätigung durch abwechslungsweisen Druckaufbau und Druckabbau an den Hinterradbremsen (62, 64) im Mittel ein Sättigungsbremsdruck (pHA) einstellen, welcher unterhalb des vom Fahrer durch die Bremspedalbetätigung vorgegebenen Vordrucks (pVor) sich befindet im Sinne einer Begrenzung des Drucks (pHA) an der Hinterachse.

12. Vorrichtung nach Anspruch 11, dadurch gekennzeichnet, daß sich die Steuereinheit (10) wenigstens ein erstes Element (14) zur Steuerung der Bremsanlage sowie ein zweites Element (18) zum wechselweise Druckauf- und -abbau umfaßt.

## Claims

1. Method for controlling the brake force distribution between the front axle and the rear axle of a motor vehicle, in which case pressure to at least the rear wheel brakes (62, 64) is increased and decreased by a control unit (10), characterized in that, on brake operation, a saturation brake pressure (pHA) is produced on average by alternately increasing and reducing the pressure on the rear wheel brakes (62, 64), which saturation brake pressure (pHA) is less than the initial pressure (pVor) predetermined by the driver by brake pedal operation, in order to limit the brake pressure (pHA) at the rear axle.

2. Method according to Claim 1, characterized in that the pressure at the rear wheel brakes (62, 64) is alternately increased and decreased by alternately actuating inlet and outlet valves (54-60).

3. Method according to one of the preceding claims, characterized in that the pressure is increased and reduced by predetermined pressure-increasing and pressure-reducing pulses (ΔtE, ΔtA).

4. Method according to Claim 3, characterized in that the length of the pressure-increasing and pressure-reducing pulses (ΔtE, ΔtA) is dependent on at least one of the variables vehicle power supply voltage (UB), initial pressure (Pvor) and the rear wheel brake pressure (pHA).

5. Method according to one of the preceding claims, characterized in that a predetermined pressure-increasing pulse (ΔtF) is output at the start of the braking process.

6. Method according to one of the preceding claims, characterized in that a return pump (68) is switched on during the braking process.

7. Method according to one of the preceding claims, characterized in that the pulse lengths (ΔtE, ΔtA) of the pressure-increasing and pressure-reducing pulses are determined in such a manner that, up to an initial pressure (Pvor1) which is predetermined by the driver, the critical brake pressure (pHAkrit) in the rear wheel brakes (62, 64), at which the rear wheels tend to lock and for a given friction coefficient is not exceeded.

8. Method according to one of the preceding claims, characterized in that the alternate increasing and decreasing of the pressure is limited in time.

9. Method according to one of the preceding claims, characterized in that, once a maximum predetermined time has elapsed, a series of pressure-increasing pulses is output, which raises the rear wheel brake pressure (pHA) in the form of a ramp to the initial pressure (pVor) predetermined by the driver.

10. Method according to one of the preceding claims, characterized in that the alternate increasing and decreasing of pressure at the rear wheel brakes (62, 64) is carried out if an electronic brake force distribution regulator (14) fails, preferably in fault cases in which the regulator lacks essential information to carry out the brake force distribution regulation process.

11. Apparatus for controlling the brake force distribution between the front axle and rear axle of a motor vehicle having an electronic control unit (10) which increases the pressure and reduces the pressure at least at the rear wheel brakes (62, 64), characterized in that the control unit (10) has means (14, 18) which, on brake operation, produce a saturation brake pressure (pHA) on average by alternately increasing and reducing the pressure at the rear wheel brakes (62, 64), which saturation brake pressure (pHA) is produced on average by alternately increasing and reducing the pressure on the rear wheel brakes (62, 64), which saturation brake pressure (pHA) is less than the initial pressure (pVor) predetermined by the driver by brake pedal operation, in order to limit the brake pressure (pHA) at the rear axle.

12. Apparatus according to Claim 11, characterized in that the control unit (10) comprises at least one first element (14) for controlling the brake system, as well as a second element (18) for alternately increasing and reducing the pressure.

## Revendications

1. Procédé servant à commander la répartition des forces de freinage entre l'essieu avant et l'essieu arrière, en faisant monter et descendre la pression au moins sur les freins (62, 64) des roues arrière au moyen d'une unité de commande (10),
caractérisé en ce que
lors de l'actionnement du frein on établit par une montée de la pression et une baisse de la pression alternatives une pression de freinage de saturation (pHA) dans le fluide sur les freins (62, 64) des roues arrière, pression qui se trouve en dessous de la pression préalable (pVor) prédéfinie par le conducteur en actionnant la pédale de frein, dans le sens d'une limitation de la pression (pHA) sur l'essieu arrière.

2. Procédé selon la revendication 1,
caractérisé en ce que
la montée de la pression et la baisse de la pression alternatives a lieu sur les freins des roues arrière (62, 64) en commandant de façon alternée les vannes d'entrée et les vannes de sortie (54 à 60).

3. Procédé selon l'une des revendications précédentes,
caractérisé en ce que
l'on réalise la montée de la pression et la baisse de la pression par des impulsions prédéfinies de montée de la pression et de baisse de la pression (ΔtE, ΔtA).

4. Procédé selon la revendication 3,
caractérisé en ce que
la longueur des impulsions de montée de la pression et de baisse de la pression (ΔtE, ΔtA), est fonction d'au moins l'une des grandeurs suivantes : la tension du réseau de bord, (UB), la pression préalable (Pvor) et la pression sur les freins des roues arrière (pHA).

5. Procédé selon l'une des revendications précédentes, caractérisé en ce que
au début du processus de freinage on délivre une impulsion prédéfinie (ΔtF) de montée de la pression.

6. Procédé selon l'une des revendications précédentes, caractérisé en ce que
pendant le processus de freinage on branche une pompe de refoulement (68).

7. Procédé selon l'une des revendications précédentes, caractérisé en ce que
les longueurs (ΔtE, ΔtA) des impulsions de montée et de baisse de la pression sont déterminées de telle sorte que la pression critique de freinage (pHAkrit) ne soit pas dépassée jusqu'à une pression préalable prédéfinie par le conducteur, dans les freins des roues arrière (62, 64), pression critique à laquelle les roues arrière ont tendance à se bloquer pour un coefficient de frottement prédéfini.

8. Procédé selon l'une des revendications précédentes, caractérisé en ce que
la montée de la pression et la baisse de la pression alternatives sont limitées dans le temps.

9. Procédé selon l'une des revendications précédentes, caractérisé en ce que
après l'écoulement d'un temps maximal prédéfini, on délivre une série d'impulsions de montée de la pression, qui amène la pression sur les freins des roues arrière (pHA) selon une courbe en forme de rampe à la pression préalable (pVor) prédéfinie par le conducteur.

10. Procédé selon l'une des revendications précédentes,
caractérisé en ce que
la montée de la pression et la baisse de la pression alternatives sur les freins des roues arrière (62, 64) son effectuées en cas de défaillance d'un régulateur électronique (14) de la répartition des forces de freinage, de préférence en cas de défauts, dans lesquels le régulateur manquent d'informations essentielles pour effectuer la régulation de la répartition des forces de freinage.

11. Dispositif servant à commander la répartition des forces de freinage entre l'essieu avant et l'essieu arrière, comprenant une unité électronique de commande (10), qui fait monter la pression et qui fait descendre la pression au moins sur les freins des roues arrière (62, 64),
caractérisé en ce que
l'unité de commande (10) présente des moyens (14, 18), qui établissent dans le fluide une pression de freinage de saturation (pHA), en actionnant les freins en faisant monter la pression et en faisant baisser la pression de manière alternative sur les freins des roues arrière (62, 64), pression qui se trouve en dessous de la pression (pVor) prédéfinie par le conducteur en actionnant la pédale de frein, dans le sens d'une limitation de la pression (pHA) sur l'essieu arrière.

12. Dispositif selon la revendication 11,
caractérisé en ce que
l'unité de commande (10) comprend au moins un premier élément (14) servant à commander l'installation de freinage ainsi qu'un deuxième élément (18) servant à faire monter la pression et à faire baisser la pression de façon alternée.
